# EUROPEAN PATENT APPLICATION

(11) **EP 4 811 617 A1**
(43) Date of publication of application: **23.09.2026**
(21) Application number: 26164483.5
(22) Date of filing: 13.03.2026
(51) Int. Cl.: H02K 5/04, H02K 33/16, B06B 1/04, H02K 9/02

(54) **VIBRATION MODULE, CONTROLLER, AND CONTROLLER SET**

(30) Priority: 18.03.2025 JP 2025043694
(71) Applicant: Nintendo Co., Ltd., Kyoto-shi, Kyoto 601-8501 (JP)
(72) Inventor: TAMURA, Yoshitaka, Kyoto, 601-8501 (JP)
(74) Representative: Lorenz Seidler Gossel Part. mbB

(57) **Abstract**

A vibration module includes a substantially rectangular case and a core. The core is disposed inside the case and performs linear reciprocating vibration. The case is provided with a recess at at least one of four corners of the rectangle.

## Description

The present disclosure relates to a vibration module, a controller, and a controller set.

### INTRODUCTION

Conventionally, rectangular and circular vibration modules exist (Japanese Patent Gazette No. 6,807,985 and Japanese Patent Gazette No. 7,547,100).

### SUMMARY

Conventional vibration modules had room for improvement in their shape.

### (Configuration 1)

A vibration module according to one embodiment includes a substantially rectangular case and a core. The core is disposed inside the case and performs linear reciprocating vibration. The case is provided with a recess at at least one of four corners of the rectangle.

### (Configuration 2)

In Configuration 1, the core may be provided with a core recess at a position corresponding to the recess of the case.

### (Configuration 3)

In Configuration 1 or 2, the case may be provided with the recess at each of the four corners, and the core may be provided with a core recess at a position corresponding to each of the recesses.

### (Configuration 4)

In Configuration 2, the core may include at least a yoke and a magnet, and the yoke may have a shape that defines the core recess, and the magnet may be rectangular.

### (Configuration 5)

In Configuration 1, a shape of the core may be vertically symmetrical and horizontally symmetrical.

### (Configuration 6)

In any one of Configurations 1 to 5, the case may be provided with recesses at at least two corners among the four corners, the two corners being horizontally symmetrical, vertically symmetrical, or point symmetrical.

### (Configuration 7)

In any one of Configurations 1 to 6, at least a part of the recess may be open.

### (Configuration 8)

In any one of Configurations 1 to 7, the case may have a front surface and a rear surface opposite to the front surface, and the recess may extend from the front surface to the rear surface.

### (Configuration 9)

In any one of Configurations 1 to 8, a linear resonant actuator or a voice coil motor may be used.

### (Configuration 10)

In any one of Configurations 1 to 9, the vibration module may be disposed in a housing, the housing may have a rounded shape portion, and the vibration module may be disposed in contact with the rounded shape portion.

### (Configuration 11)

A controller according to one embodiment includes the vibration module according to any one of Configurations 1 to 10 and a housing in which the vibration module is disposed. The housing has a rounded shape portion at least in part. The vibration module is disposed around in contact with the rounded shape portion.

### (Configuration 12)

A controller set according to one embodiment has an outer geometry in a line-symmetrical shape, and includes the vibration module according to any one of Configurations 1 to 10. Each controller has a rounded shape portion at least in part. The recess of the vibration module is disposed at the rounded shape portion.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

FIG. 1 is a schematic perspective view showing a configuration of a vibration module according to the present embodiment.
FIG. 2 is a schematic plan view showing a configuration of a case.
FIG. 3 is a partial schematic cross-sectional view along the line III-III in FIG. 1.
FIG. 4 is a partial schematic cross-sectional view along the line IV-IV in FIG. 3.
FIG. 5 is a schematic plan view showing a configuration of a magnet.
FIG. 6 is a schematic plan view showing a configuration of a yoke.
FIG. 7 is a partial schematic cross-sectional view showing a configuration of a controller according to the present embodiment.
FIG. 8 is a partial schematic cross-sectional view showing a configuration of a controller set according to the present embodiment.

### DETAILED DESCRIPTION

An embodiment of the present disclosure (hereinafter also referred to as "the present embodiment") will be described in detail with reference to the drawings. Note that the same or corresponding parts in the drawings are denoted by the same reference numerals, and their descriptions will not be repeated.

### [Vibration Module]

### [A. Overview]

First, a configuration of a vibration module according to the present embodiment will be described.

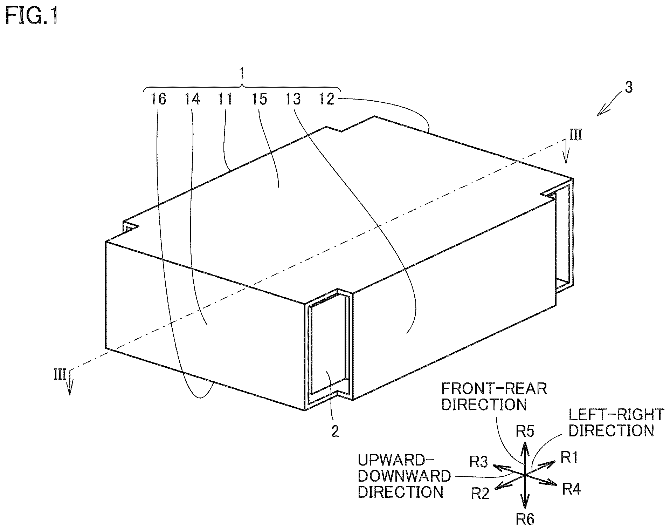

FIG. 1 is a schematic perspective view showing the configuration of the vibration module according to the present embodiment. As shown in FIG. 1, a vibration module 3 includes a case 1 and a core 2. The core 2 is disposed inside the case 1. The case 1 has a substantially rectangular parallelepiped shape. The case 1 has a first side surface 11, a second side surface 12, a third side surface 13, a fourth side surface 14, a front surface 15, and a rear surface 16. The third side surface 13 is on the opposite side of the first side surface 11. The fourth side surface 14 is on the opposite side of the second side surface 12. The rear surface 16 is on the opposite side of the front surface 15. The front surface 15 is contiguous to each of the first side surface 11, second side surface 12, third side surface 13, and fourth side surface 14. Similarly, the rear surface 16 is contiguous to each of the first side surface 11, second side surface 12, third side surface 13, and fourth side surface 14.

In this specification, a direction from the fourth side surface 14 toward the second side surface 12 is referred to as a first direction R1. A direction from the second side surface 12 toward the fourth side surface 14 is referred to as a second direction R2. The first direction R1 and the second direction R2 are collectively referred to as a left-right direction. A direction from the third side surface 13 toward the first side surface 11 is referred to as a third direction R3. A direction from the first side surface 11 toward the third side surface 13 is referred to as a fourth direction R4. The third direction R3 and the fourth direction R4 are collectively referred to as an upward-downward direction. A direction from the rear surface 16 toward the front surface 15 is referred to as a fifth direction R5. A direction from the front surface 15 toward the rear surface 16 is referred to as a sixth direction R6. The fifth direction R5 and the sixth direction R6 are collectively referred to as a front-rear direction.

### [B. Case]

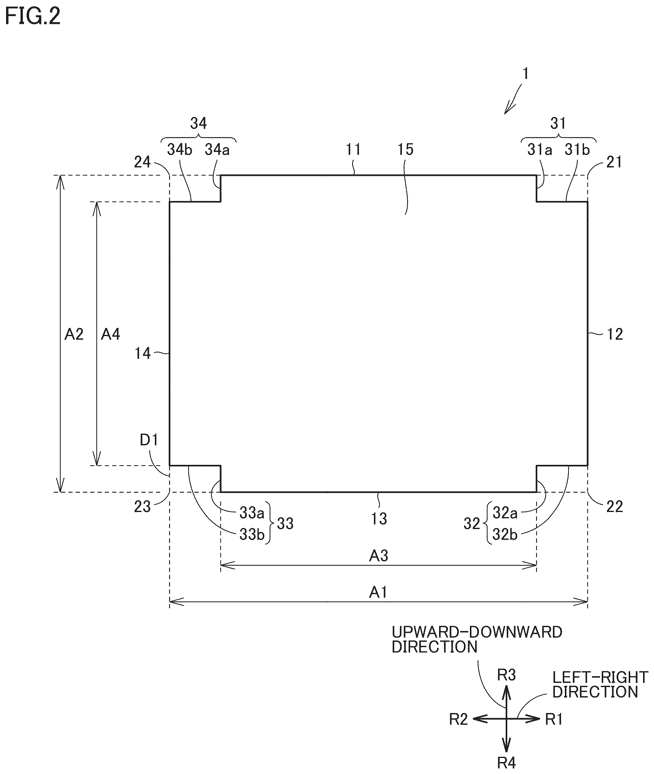

FIG. 2 is a schematic plan view showing a configuration of the case. As shown in FIG. 2, the case 1 has side surfaces along respective sides of a rectangle. Specifically, the case 1 has first side surface 11, second side surface 12, third side surface 13, and fourth side surface 14 along each respective sides of a first rectangle D1. As seen along the front-rear direction shown in FIG. 2, the first side surface 11 and the third side surface 13 are substantially parallel. Similarly, the second side surface 12 and the fourth side surface 14 are substantially parallel.

The rectangle has four corner portions. Specifically, the first rectangle D1 has a first corner portion 21, a second corner portion 22, a third corner portion 23, and a fourth corner portion 24. In the case 1 of the present embodiment, a recess is provided at each of the four corner portions. Specifically, the case 1 is provided with a first recess 31, a second recess 32, a third recess 33, and a fourth recess 34. The first recess 31, second recess 32, third recess 33, and fourth recess 34 are provided at the first corner portion 21, second corner portion 22, third corner portion 23, and fourth corner portion 24 of the first rectangle D1, respectively.

The first recess 31 is defined by a first vertical end portion 31a and a first horizontal end portion 31b contiguous to the first vertical end portion 31a. The first vertical end portion 31a is contiguous to each of the first side surface 11 and the front surface 15. The first horizontal end portion 31b is contiguous to each of the second side surface 12 and the front surface 15. The second recess 32 is defined by a second vertical end portion 32a and a second horizontal end portion 32b contiguous to the second vertical end portion 32a. The second vertical end portion 32a is contiguous to each of the third side surface 13 and the front surface 15. The second horizontal end portion 32b is contiguous to each of the second side surface 12 and the front surface 15.

The third recess 33 is defined by a third vertical end portion 33a and a third horizontal end portion 33b contiguous to the third vertical end portion 33a. The third vertical end portion 33a is contiguous to each of the third side surface 13 and the front surface 15. The third horizontal end portion 33b is contiguous to each of the fourth side surface 14 and the front surface 15. The fourth recess 34 is defined by a fourth vertical end portion 34a and a fourth horizontal end portion 34b contiguous to the fourth vertical end portion 34a. The fourth vertical end portion 34a is contiguous to each of the first side surface 11 and the front surface 15. The fourth horizontal end portion 34b is contiguous to each of the fourth side surface 14 and the front surface 15.

The above describes the case 1 in which the recess is provided at each of the four corner portions of the rectangle, but the vibration module 3 according to the present embodiment is not limited to the above. Specifically, it is sufficient that the case 1 is provided with a recess at at least one of the four corner portions of the rectangle. For example, the case 1 may be provided with the first recess 31, and the second recess 32, third recess 33, and fourth recess 34 may not be provided.

The case 1 may be provided with recesses at at least two corner portions among the four corner portions, which are symmetrical in the left-right direction, symmetrical in the up-down direction, or point-symmetrical. For example, the case 1 may be provided with the first recess 31 and the second recess 32, and the third recess 33 and the fourth recess 34 may not be provided. For example, the case 1 may be provided with the first recess 31 and the third recess 33, and the second recess 32 and the fourth recess 34 may not be provided.

As shown in FIGs. 1 and 2, the recess may extend from the front surface 15 to the rear surface 16. In the vibration module 3 according to the present embodiment, each of the first recess 31, second recess 32, third recess 33, and fourth recess 34 extends from the front surface 15 to the rear surface 16. At least one of the first recess 31, second recess 32, third recess 33, and fourth recess 34 may extend from the front surface 15 to the rear surface 16, and other recesses may not extend from the front surface 15 to the rear surface 16.

As shown in FIG. 2, a distance between the second side surface 12 and the fourth side surface 14 in the left-right direction is referred to as a first case distance A1. A distance between the first side surface 11 and the third side surface 13 in the upward-downward direction is referred to as a second case distance A2. In the vibration module 3 according to the present embodiment, the first case distance A1 is longer than the second case distance A2. A distance between the second vertical end portion 32a and the third vertical end portion 33a in the left-right direction is referred to as a third case distance A3. A distance between the third horizontal end portion 33b and the fourth horizontal end portion 34b in the upward-downward direction is referred to as a fourth case distance A4. In the vibration module 3 according to the present embodiment, the third case distance A3 is longer than the fourth case distance A4.

### [C. Core]

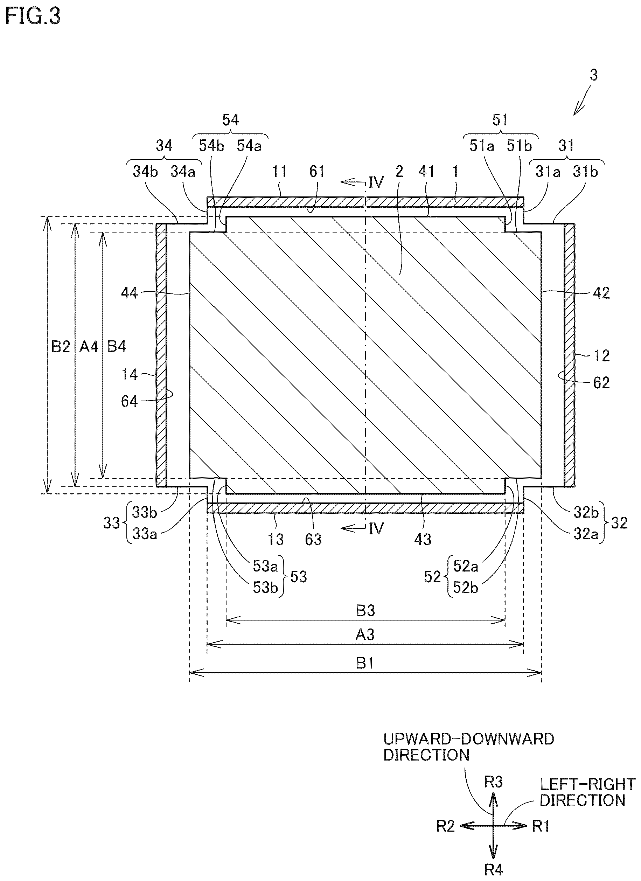

FIG. 3 is a partial schematic cross-sectional view along the line III-III in FIG. 1. The cross-sectional diagram view shown in FIG. 3 is parallel to each of the left-right direction and the upward-downward direction. As shown in FIG. 3, the core 2 is provided with a core recess at a positions corresponding to the recesses of the case 1. Specifically, the core 2 is provided with a first core recess 51, a second core recess 52, a third core recess 53, and a fourth core recess 54. The first core recess 51 is provided at a position corresponding to the first recess 31. The second core recess 52 is provided at a position corresponding to the second recess 32. The third core recess 53 is provided at a position corresponding to the third recess 33. The fourth core recess 54 is provided at a position corresponding to the fourth recess 34.

The core 2 has a first core side surface 41, a second core side surface 42, a third core side surface 43, and a fourth core side surface 44. The third core side surface 43 is on the opposite side of the first core side surface 41. The fourth core side surface 44 is on the opposite side of the second core side surface 42.

The first core recess 51 is defined by a first core vertical end portion 51a and a first core horizontal end portion 51b contiguous to the first core vertical end portion 51a. The first core vertical end portion 51a is contiguous to the first core side surface 41. The first core horizontal end portion 51b is contiguous to the second core side surface 42. The second core recess 52 is defined by a second core vertical end portion 52a and a second core horizontal end portion 52b contiguous to the second core vertical end portion 52a. The second core vertical end portion 52a is contiguous to the third core side surface 43. The second core horizontal end portion 52b is contiguous to the second core side surface 42.

The third core recess 53 is defined by a third core vertical end portion 53a and a third core horizontal end portion 53b contiguous to the third core vertical end portion 53a. The third core vertical end portion 53a is contiguous to the third core side surface 43. The third core horizontal end portion 53b is contiguous to the fourth core side surface 44. The fourth core recess 54 is defined by a fourth core vertical end portion 54a and a fourth core horizontal end portion 54b contiguous to the fourth core vertical end portion 54a. The fourth core vertical end portion 54a is contiguous to the first core side surface 41. The fourth core horizontal end portion 54b is contiguous to the fourth core side surface 44.

The first core recess 51 is disposed inward of the first recess 31. Specifically, the first core vertical end portion 51a is located in the second direction R2 relative to the first vertical end portion 31a. The first core horizontal end portion 51b is located in the fourth direction R4 relative to the first horizontal end portion 31b. The second core recess 52 is disposed inward of the second recess 32. Specifically, the second core vertical end portion 52a is located in the second direction R2 relative to the second vertical end portion 32a. The second core horizontal end portion 52b is located in the third direction R3 relative to the second horizontal end portion 32b.

The third core recess 53 is disposed inward of the third recess 33. Specifically, the third core vertical end portion 53a is located in the first direction R1 relative to the third vertical end portion 33a. The third core horizontal end portion 53b is located in the third direction R3 relative to the third horizontal end portion 33b. The fourth core recess 54 is disposed inward of the fourth recess 34. Specifically, the fourth core vertical end portion 54a is located in the first direction R1 relative to the fourth vertical end portion 34a. The fourth core horizontal end portion 54b is located in the fourth direction R4 relative to the fourth horizontal end portion 34b.

The core 2 performs linear reciprocating vibration. Specifically, the core 2 reciprocates along the left-right direction. A plane in which the core 2 reciprocates is perpendicular to the front-rear direction. That is, the schematic cross-sectional view shown in FIG. 3 is a view from the direction in which the reciprocating motion of the core 2 is seen in a plan view.

According to the vibration module 3 of the present embodiment, the core 2 is provided with the core recess at the positions corresponding to the recess of the case 1. As a result, it is possible to maintain a volume of the core 2 while avoiding interference between the core 2 and a housing or other components, thereby suppressing reduction in strength of vibration due to a size and/or a maximum amplitude of a vibrator.

The case 1 has a first inner wall surface 61, a second inner wall surface 62, a third inner wall surface 63, and a fourth inner wall surface 64. The first inner wall surface 61 faces the first core side surface 41. The second inner wall surface 62 faces the second core side surface 42. The third inner wall surface 63 faces the third core side surface 43. The fourth inner wall surface 64 faces the fourth core side surface 44. A distance between the second inner wall surface 62 and the second core side surface 42 in the left-right direction is longer than a distance between the first inner wall surface 61 and the first core side surface 41 in the upward-downward direction. A distance between the fourth inner wall surface 64 and the fourth core side surface 44 in the left-right direction is longer than a distance between the third inner wall surface 63 and the third core side surface 43 in the upward-downward direction. As a result, it is possible to secure a space for the core 2 to reciprocate along the left-right direction.

A distance between the second core side surface 42 and the fourth core side surface 44 in the left-right direction is referred to as a first core distance B1. A distance between the first core side surface 41 and the third core side surface 43 in the upward-downward direction is referred to as a second core distance B2. The first core distance B1 is longer than the second core distance B2. A distance between the second core vertical end portion 52a and the third core vertical end portion 53a in the left-right direction is referred to as a third core distance B3. A distance between the third core horizontal end portion 53b and the fourth core horizontal end portion 54b in the upward-downward direction is referred to as a fourth core distance B4. The third core distance B3 is longer than the fourth core distance B4.

As shown in FIG. 3, the third case distance A3 is longer than the third core distance B3 and shorter than the first core distance B1. The fourth case distance A4 is longer than the fourth core distance B4 and shorter than the second core distance B2. As a result, it is possible to increase the volume of the core 2 without the core 2 protruding from the case 1.

As shown in FIGs. 1 and 3, the first recess 31, second recess 32, third recess 33, and fourth recess 34 are open. Specifically, the first vertical end portion 31a is contiguous to the first inner wall surface 61. The first horizontal end portion 31b is contiguous to the second inner wall surface 62. The second vertical end portion 32a is contiguous to the third inner wall surface 63. The second horizontal end portion 32b is contiguous to the second inner wall surface 62. The third vertical end portion 33a is contiguous to the third inner wall surface 63. The third horizontal end portion 33b is contiguous to the fourth inner wall surface 64. The fourth vertical end portion 34a is contiguous to the first inner wall surface 61. The fourth horizontal end portion 34b is contiguous to the fourth inner wall surface 64.

The above describes the case where all four recesses are open, but the vibration module 3 of the present embodiment is not limited to the above. Specifically, among the four recesses, one recess may be open and the remaining three recesses may not be open. In another aspect, two of the four recesses may be open and the remaining two may not be open. In yet another aspect, three of the four recesses may be open and the remaining one may not be open.

According to the vibration module 3 of the present embodiment, at least a part of the recess is open. As a result, air can enter and exit from the case 1 through the opening, allowing heat generated from the core 2 to escape to the outside of the case 1. Therefore, heat dissipation performance of the vibration module 3 can be improved.

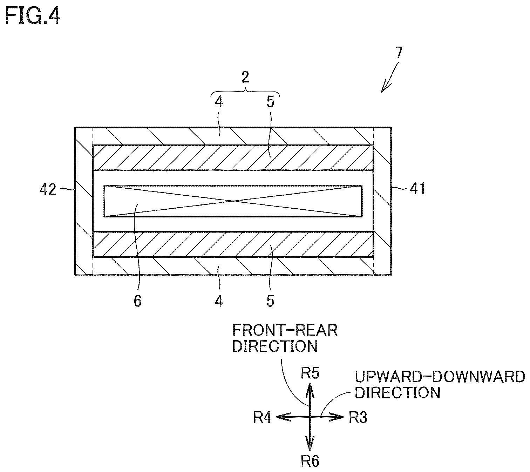

FIG. 4 is a partial schematic cross-sectional view along the line IV-IV in FIG. 3. As shown in FIG. 4, the vibration module 3 has a vibration mechanism 7. The vibration mechanism 7 includes the core 2 and a coil 6. The core 2 is comprised, for example, of a yoke 4 and a magnet 5. The core 2 moves relative to the coil 6. When an alternating current is applied to the coil 6, the core 2 performs reciprocating linear motion. In the present embodiment, the core 2 performs reciprocating linear motion in the left-right direction. The coil 6 is stationary. The vibration mechanism 7 is, for example, a linear resonant actuator or a voice coil motor.

The magnet 5 is spaced apart from the coil 6. The magnet 5 is disposed facing the coil 6. According to the vibration module 3 of the present embodiment, in the front-rear direction, the magnet 5 is provided, for example, on both sides of the coil 6. The yoke 4 is provided in contact with the magnet 5. As shown in FIG. 4, when viewed along the left-right direction, the yoke 4 is provided to surround the coil 6. The first core side surface 41 and the second core side surface 42 may be formed by the yoke 4. Similarly, the third core side surface 43 and the fourth core side surface 44 may be formed by the yoke 4.

Note that the core 2 should only be comprised of at least the yoke 4 and the magnet 5, and may include a member other than the yoke 4 and the magnet 5.

### [D. Magnet]

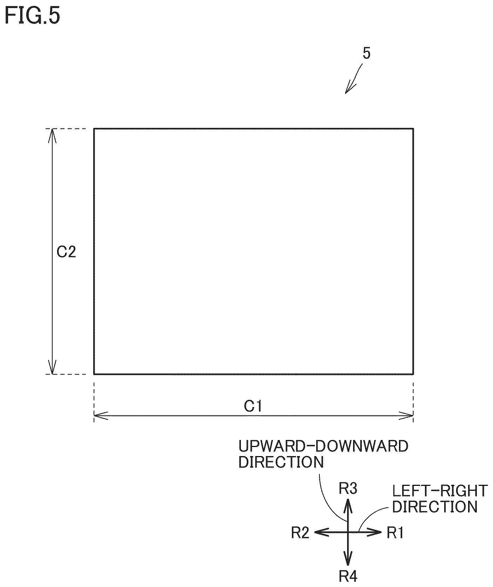

FIG. 5 is a schematic plan view showing a configuration of the magnet. As shown in FIG. 5, in the present example, when viewed from the direction in which the reciprocating motion of the core 2 is seen in the plan view, the magnet 5 is rectangular. The magnet 5 may be quadrangular or square. A length of the magnet 5 in the left-right direction is referred to as a first magnet length C1. A length of the magnet 5 in the upward-downward direction is referred to as a second magnet length C2. The first magnet length C1 may be longer than the second magnet length C2.

### [E. Yoke]

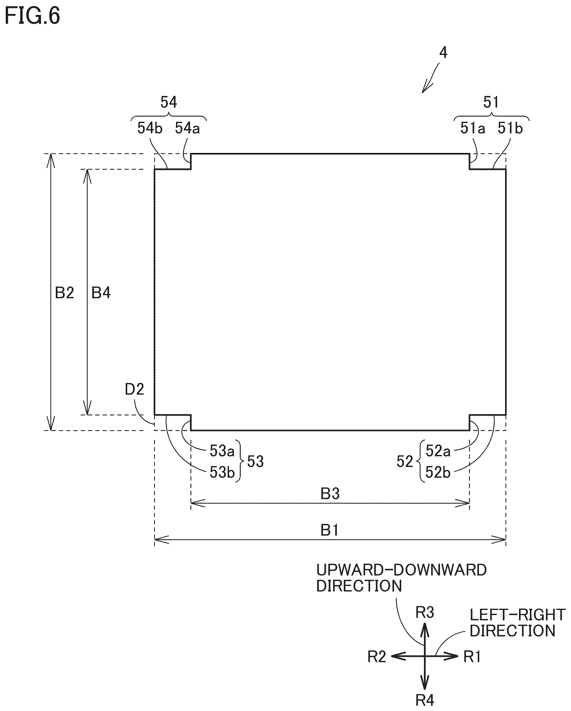

FIG. 6 is a schematic plan view showing a configuration of the yoke. As shown in FIG. 6, when viewed from the direction in which the reciprocating motion of the core 2 is seen in the plan view, the yoke 4 may have a shape in which recesses are provided at four respective corner portions of a second rectangle D2. Specifically, the yoke 4 is provided with the first core recess 51, the second core recess 52, the third core recess 53, and the fourth core recess 54. According to the vibration module 3 of the present embodiment, when viewed along the front-rear direction, the shape of the yoke 4 is substantially the same as the shape of the core 2.

As shown in FIG. 6, when viewed from the direction in which the reciprocating motion of the core 2 is seen in the plan view, the shape of the core 2 may be vertically symmetrical and horizontally symmetrical. Specifically, lengths of the first core vertical end portion 51a, the second core vertical end portion 52a, the third core vertical end portion 53a, and the fourth core vertical end portion 54a are substantially the same. Lengths of the first core horizontal end portion 51b, the second core horizontal end portion 52b, the third core horizontal end portion 53b, and the fourth core horizontal end portion 54b are substantially the same.

According to the vibration module 3 of the present embodiment, the core 2 is comprised of at least the yoke 4 and the magnet 5. When viewed from the direction in which the reciprocating motion of the core 2 is seen in the plan view, by providing the core recesses in the yoke 4 and making the magnet 5 rectangular, the vibration module 3 can be easily manufactured.

According to the vibration module 3 of the present embodiment, when viewed from the direction in which the reciprocating motion of the core 2 is seen in the plan view, the shape of the core 2 is vertically symmetrical and horizontally symmetrical. As a result, in addition to suppression of reduction in strength of vibration, it is possible to suppress the occurrence of unintended vibration due to imbalance in weight distribution.

### [F. Modification]

Next, a configuration of a modification of the vibration module 3 will be described. When viewed from the direction in which the reciprocating motion of the core 2 is seen in the plan view, the shape of the core 2 may be vertically symmetrical and horizontally symmetrical, and the shape of the case 1 may not be vertically symmetrical and horizontally symmetrical. For example, the core 2 may be provided with the first core recess 51, the second core recess 52, the third core recess 53, and the fourth core recess 54, and the case 1 may be provided only with the first recess 31, and not provided with the second recess 32, third recess 33, and fourth recess 34.

In the above, the magnet 5 is provided on both sides of the coil 6, but the configuration is not limited to the above. There may be only a single magnet 5. In this case, the magnet 5 may be provided only on one side of the coil 6 in the front-rear direction.

In the above, at least one of the recesses provided in the case 1 is open, but the configuration is not limited to the above. For example, none of the four recesses may be open.

### [Controller]

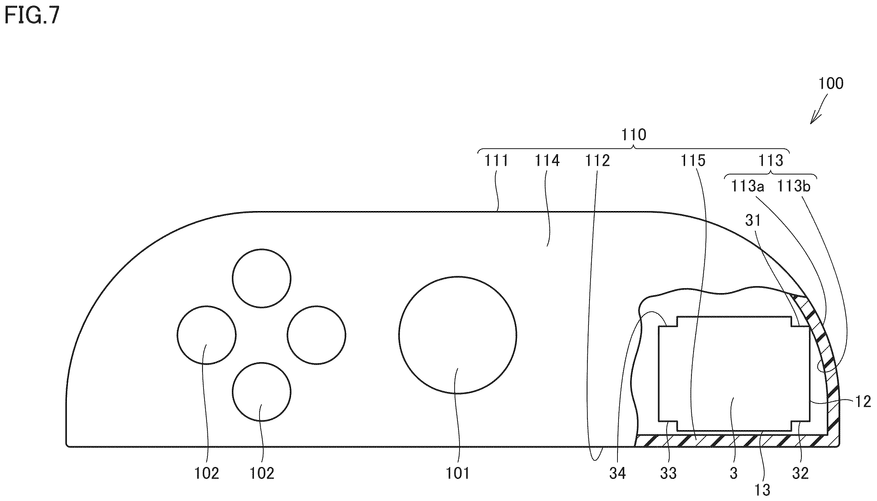

Next, a configuration of a controller according to the present embodiment will be described. FIG. 7 is a partial schematic cross-sectional view showing the configuration of the controller according to the present embodiment. As shown in FIG. 7, a controller 100 includes a housing 110, a plurality of operation buttons 102, an operation stick 101, and the vibration module 3. The housing 110 has a rounded shape portion 113 at least in part. The housing 110 of the controller 100 according to the present embodiment includes a housing front surface 114, a housing top surface 111, a housing bottom surface 112, the rounded shape portion 113, and a linear shape portion 115. The plurality of operation buttons 102 and the operation stick 101 are disposed at the housing front surface 114.

The housing top surface 111 is contiguous to the housing front surface 114. The housing bottom surface 112 is contiguous to the housing front surface 114. The housing bottom surface 112 is on the opposite side of the housing top surface 111. The rounded shape portion 113 is contiguous to the housing front surface 114. The rounded shape portion 113 has a rounded inner wall surface 113b and a rounded outer wall surface 113a. The rounded outer wall surface 113a connects the housing top surface 111 and the housing bottom surface 112 to each other. The linear shape portion 115 is contiguous to the rounded shape portion 113. The linear shape portion 115 forms the housing bottom surface 112.

The vibration module 3 included in the controller 100 according to the present embodiment is the same as the vibration module 3 according to the present embodiment. The vibration module 3 is disposed in the housing 110. The vibration module 3 is disposed so as to be in contact with the rounded inner wall surface 113b of the rounded shape portion 113. In the front view, the rounded inner wall surface 113b may be arcuate or may be elliptically arcuate or the like. The first recess 31 provided in the case 1 of the vibration module 3 is disposed at the rounded shape portion 113. Specifically, the first recess 31 is disposed so as to face the rounded inner wall surface 113b. The second side surface 12 of the case 1 faces the rounded inner wall surface 113b. The third side surface 13 of the case 1 faces an inner wall surface of the linear shape portion 115.

Since the vibration module 3 has a notch 31 at the corner portion, interference with the rounded wall surface 113b can be avoided. In other words, it is possible to increase a volume and a vibration amount of the vibration module 3 (core 2) without interfering with the rounded wall surface 113b.

In the above, the case where the housing 110 of the controller 100 has the rounded shape portion 113 and the linear shape portion 115 has been described, but the housing 110 of the controller 100 may not have the linear shape portion 115. Specifically, in the front view, the controller 100 may be in a shape of a perfect circle or an ellipse.

The vibration module 3 according to the present embodiment includes the case 1 and the core 2. The core 2 is disposed inside the case 1. The case 1 is provided with the recess at at least one of the four corner portions of the rectangle. As a result, the vibration module 3 can be disposed while avoiding interference with the housing 110 or other components. Further, by providing recesses at at least two corner portions of the case 1 that are symmetrical in the left-right direction, symmetrical in the up-down direction, or point-symmetrical, the same module can be used in different devices (controllers, etc.) while avoiding interference with the housing or other components.

### [Controller Set]

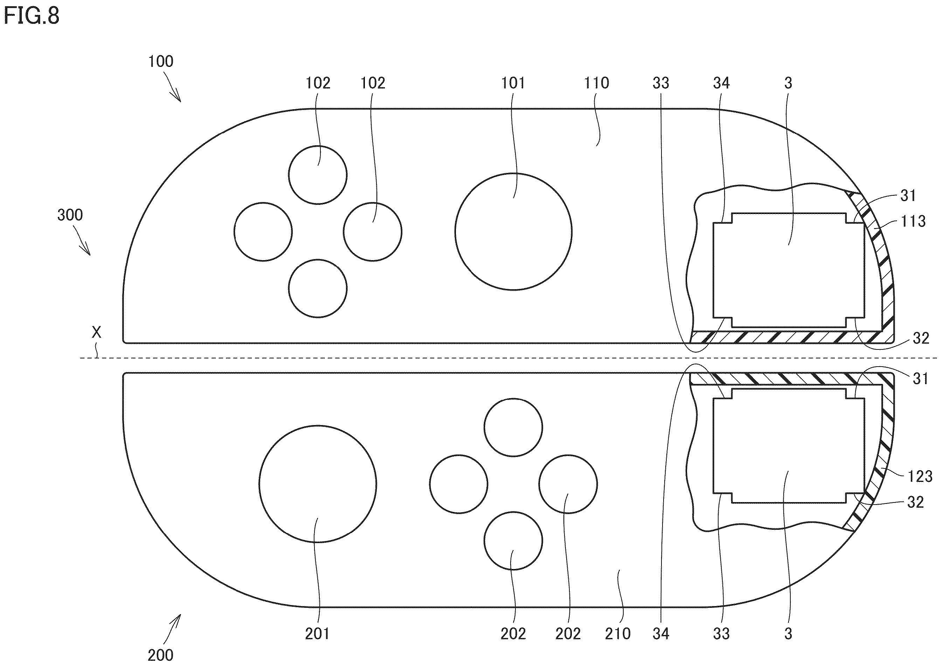

Next, a configuration of a controller set according to the present embodiment will be described. FIG. 8 is a partial schematic cross-sectional view showing the configuration of a controller set 300 according to the present embodiment. As shown in FIG. 8, the controller set 300 according to the present embodiment includes a first controller 100 and a second controller 200. The first controller 100 is the same as the controller 100 according to the present embodiment.

As shown in FIG. 8, the second controller 200 includes a second housing 210, a plurality of second operation buttons 202, a second operation stick 201, and the vibration module 3. The second housing 210 has a second rounded shape portion 123.

The vibration module 3 included in the second controller 200 is the same as the vibration module 3 according to the present embodiment. The vibration module 3 is disposed in the second housing 210. In the front view, an inner wall surface of the second rounded shape portion 123 is arcuate. The second recess 32 provided in the case 1 of the vibration module 3 is disposed at the second rounded shape portion 123. Specifically, the second recess 32 is disposed so as to face the inner wall surface of the second rounded shape portion 123.

As shown in FIG. 8, an outer geometry of the controller set 300 is line-symmetrical with respect to a virtual straight line. Specifically, an outer geometry of the first controller 100 and an outer geometry of the second controller 200 are line-symmetrical with respect to a virtual straight line X. The first operation stick 101 and the second operation button 202 are disposed at positions line-symmetrical with respect to the virtual straight line X. Similarly, the second operation stick 201 and the first operation button 102 are disposed at positions line-symmetrical with respect to the virtual straight line X.

According to the vibration module 3 of the present embodiment, recesses may be provided at at least two corner portions among the four corner portions of the case 1 that are symmetrical in the left-right direction, symmetrical in the up-down direction, or point-symmetrical. As a result, the vibration modules 3 the same in shape can be disposed in components having a configuration in which portions of interference with the vibration module 3 are symmetrical in the left-right direction, symmetrical in the up-down direction, or point-symmetrical.

The embodiment disclosed this time should be considered as being illustrative and non-restrictive in every respect. The scope of the present invention is indicated by the claims rather than the above description, and is intended to include all modifications within the meaning and scope equivalent to the claims.

## Claims

1. A vibration module (3) comprising:
a substantially rectangular case (1); and
a core (2) disposed inside the case, the core being configured to perform linear reciprocating vibration, wherein
the case is provided with a recess (31, 32, 33, 34) at at least one of four corners of the rectangle.

2. The vibration module according to claim 1, wherein
the core is provided with a core recess (51, 52, 53, 54) at a position corresponding to the recess of the case.

3. The vibration module according to claim 1, wherein
the case is provided with the recess at each of the four corners, and
the core is provided with a core recess at a position corresponding to the recess.

4. The vibration module according to claim 2, wherein
the core comprises at least a yoke (4) and a magnet (5), and
the yoke has a shape that defines the core recess, and the magnet is rectangular.

5. The vibration module according to claim 2, wherein
a shape of the core is vertically symmetrical and horizontally symmetrical.

6. The vibration module according to any one of claims 1 to 5, wherein
the case is provided with recesses at at least two corners among the four corners, the two corners being horizontally symmetrical, vertically symmetrical, or point symmetrical.

7. The vibration module according to any one of claims 1 to 6, wherein at least a part of the recess is open.

8. The vibration module according to any one of claims 1 to 7, wherein
the case has a front surface (15) and a rear surface (16) opposite to the front surface, and
the recess extends from the front surface to the rear surface.

9. The vibration module according to any one of claims 1 to 8, wherein a linear resonant actuator or a voice coil motor is used.

10. The vibration module according to any one of claims 1 to 9, wherein the vibration module is disposed in a housing (110),
the housing has a rounded shape portion (113), and
the vibration module is disposed in contact with the rounded shape portion.

11. A controller (100) comprising:
the vibration module according to any one of claims 1 to 10; and
a housing in which the vibration module is disposed, wherein
the housing has a rounded shape portion at least in part, and
the vibration module is disposed in contact with the rounded shape portion.

12. A controller set (300) having an outer geometry in a line-symmetrical shape, the controller set comprising:
the vibration module according to any one of claims 1 to 10, wherein
each controller has a rounded shape portion at least in part, and
the recess of the vibration module is disposed at the rounded shape portion.
